# FASCICULE DE BREVET EUROPEEN

(11) **EP 2 209 976 B1**
(45) Date de publication et mention de la délivrance du brevet: **11.10.2017**
(21) Numéro de dépôt: 08872302.8
(22) Date de dépôt: 18.11.2008
(51) Int. Cl.: F02C 9/44, F02C 9/28, F02C 9/26, F02C 7/236

(54) **DISPOSITIF DE SURVEILLANCE D'UNE POMPE HAUTE-PRESSION DANS UN CIRCUIT D'ALIMENTATION EN CARBURANT D'UNE TURBOMACHINE**
VORRICHTUNG ZUR ÜBERWACHUNG EINER HOCHDRUCKPUMPE IN EINEM BRENNSTOFFZUMESS-SYSTEM EINER TURBOMASCHINE
SURVEILLANCE DEVICE OF A HIGH PRESSURE PUMP IN A FUEL SYSTEM OF A TURBOMACHINE

(30) Priorité: 19.11.2007 FR 0708099
(43) Date de publication de la demande: 28.07.2010
(73) Titulaire: SNECMA, 75015 Paris (FR)
(72) Inventeur: AUROUSSEAU, Christian, F-77190 Dammarie Les Lys (FR); BENITAH, Jonathan, F-94300 Vincennes (FR); FLANDROIS, Xavier, F-77240 Cesson (FR); MASSE, Jean-Rémi, F-92210 Saint Cloud (FR); SAUZEDDE, Mickaël, 03310 Villebret (FR); GODEL, Franck, F-77590 Chartrettes (FR); MAILLE, Julien, F-91530 Saint Cheron (FR)
(74) Mandataire: Ramey, Daniel
(86) Numéro de dépôt international: PCT/FR2008/001616
(87) Numéro de publication internationale: WO 2009/101267

(56) Documents cités:
- EP-A- 0 452 005
- EP-A- 1 138 933
- EP-A- 1 522 731
- EP-A- 1 552 344
- EP-A- 1 785 348
- EP-A- 1 798 400

## Description

L'invention concerne un dispositif et un procédé de surveillance d'une pompe haute-pression dans un circuit d'alimentation en carburant des injecteurs d'une turbomachine telle qu'un turboréacteur ou un turbopropulseur d'avion.

Dans une turbomachine de ce type, le circuit d'alimentation des injecteurs en carburant comprend une combinaison d'une pompe basse-pression et d'une pompe haute-pression à engrenages, la pompe basse-pression assurant le gavage de la pompe haute-pression pour éviter les phénomènes de cavitation, la pompe haute-pression fournissant un débit et une pression de carburant qui sont suffisants pour assurer l'alimentation des injecteurs de la chambre de combustion de la turbomachine, ainsi que le refroidissement du liquide de lubrification de la turbomachine et d'un système IDG (Integrated Drive Generator) et la commande d'actionneurs d'éléments à géométrie variable de la turbomachine, (tels notamment que des aubes de redresseur à calage variable).

Le carburant fourni par la pompe haute-pression passe par une unité FMU (Fuel Metering Unit) qui comprend une vanne de réglage de débit reliée à une vanne de pressurisation et de coupure, elle-même raccordée à des conduits d'alimentation des injecteurs.

En présence d'une commande électrique d'ouverture, la vanne de pressurisation et de coupure reste fermée hydrauliquement tant que la pression du carburant en sortie de la vanne de réglage n'atteint pas une valeur prédéterminée, par exemple de 19 bars.

La pompe haute-pression à engrenages est entraînée mécaniquement par la turbomachine et sa vitesse de rotation est proportionnelle à celle de la turbomachine. Le débit et la pression de carburant en sortie de cette pompe sont déterminés par la vitesse de rotation de la pompe. On a constaté qu'au fur et à mesure du vieillissement de la pompe, il fallait augmenter la vitesse de rotation de la pompe pour maintenir le débit et la pression du carburant à des valeurs prédéterminées.

Cela peut rendre difficile ou impossible un redémarrage de la turbomachine en vol lorsque, pour une raison quelconque, la turbomachine a été arrêtée et doit être redémarrée par le seul effet de l'air qui s'écoule sur les aubes de compresseur et de turbine en raison du déplacement de l'avion (une assistance du démarreur pouvant également être adoptée à certains points du domaine de rallumage). La pompe haute-pression est dans ce cas entraînée en rotation à une vitesse relativement faible mais doit cependant fournir une pression et un débit de carburant suffisants pour provoquer l'ouverture hydraulique de la vanne de pressurisation et de coupure et pour assurer une alimentation correcte des injecteurs de la turbomachine.

L'usure de la pompe haute-pression, qui se traduit par une diminution progressive du débit de carburant en sortie de pompe pour une vitesse de rotation donnée et une pression déterminée, doit être surveillée afin que la pompe soit remplacée avant qu'un redémarrage en vol devienne impossible.

Les recommandations de maintenance préconisent un remplacement de la pompe haute-pression vers 12000 heures de fonctionnement et ne permettent pas d'optimiser les durées de vie de ces pompes car, d'une part, on ne peut pas détecter les usures précoces des pompes et, d'autre part, on est parfois amené à remplacer des pompes qui sont encore en bon état de fonctionnement.

Les documents EP-A-1 522 731, EP-A-1 785 348, EP-A-0 452 005 et EP-A-1 138 933 décrivent des dispositifs de surveillance d'une pompe haute-pression dans un circuit de carburant d'une turbomachine, comprenant des moyens de détection du déplacement d'un organe du circuit.

La présente invention a pour but d'apporter une solution simple, efficace et économique à ce problème.

Elle propose une turbomachine, telle qu'un turboréacteur ou un turbopropulseur d'avion, comprenant un dispositif de surveillance d'une pompe haute-pression dans un circuit d'alimentation en carburant d'une turbomachine, ce circuit comprenant une vanne de pressurisation et de coupure qui est réglée à un seuil de pression prédéterminé et qui est montée entre une vanne de réglage de débit de carburant et un conduit d'alimentation des injecteurs, et des moyens de mesure de la vitesse de rotation de la turbomachine, caractérisé en ce qu'il comprend des moyens de détection de l'ouverture de la vanne de pressurisation et de coupure, des moyens d'enregistrement de la valeur mesurée de la vitesse de rotation de la turbomachine à l'ouverture de la vanne de pressurisation et de coupure, et des moyens de comparaison de cette valeur à un seuil prédéterminé, pour proposer le remplacement de la pompe haute-pression quand la valeur enregistrée de la vitesse de rotation atteint le seuil prédéterminé. Ces moyens sont disponibles dans le FADEC (Full Authority Digital Engine Control) du moteur.

Comme la vanne de pressurisation et de coupure du circuit d'alimentation en carburant est en général déjà équipée d'un moyen de détection de son ouverture, le dispositif de surveillance selon l'invention utilise pour l'essentiel des composants déjà installés sur la turbomachine et est donc particulièrement économique.

Par ailleurs, il permet de suivre avec précision l'évolution de la vitesse de rotation au moment de l'ouverture de la vanne de pressurisation et de coupure, cette évolution étant représentative de l'usure de la pompe haute-pression du circuit d'alimentation en carburant, pour signaler la nécessité de remplacer la pompe haute-pression lorsque la vitesse de rotation détectée atteint un seuil prédéterminé, au-delà duquel le redémarrage en vol de la turbomachine deviendrait difficile ou impossible.

Avantageusement, l'ouverture de la vanne de pressurisation et de coupure est détectée et la valeur de la vitesse de rotation correspondante est enregistrée lors de chacune des phases de démarrage de la turbomachine.

Selon une autre caractéristique de l'invention, ce dispositif comprend également des moyens de mesure de la température du carburant et des moyens de correction de la valeur enregistrée de la vitesse de rotation en fonction de l'écart entre la température mesurée et une température prédéterminée.

Cela permet de prendre en compte les variations de densité de carburant, qui résultent des variations de la température du carburant, pour corriger les valeurs enregistrées de la vitesse de rotation et ainsi faire les comparaisons au seuil prédéterminé dans des conditions correspondant à une température sensiblement constante.

L'invention propose également un procédé de surveillance d'une pompe haute-pression dans un circuit d'alimentation en carburant d'une turbomachine selon la revendication indépendante 1, ce circuit comprenant une vanne de pressurisation et de coupure montée entre une vanne de mesure de carburant et un conduit d'alimentation des injecteurs, caractérisé en ce qu'il consiste à détecter l'ouverture de la vanne de pressurisation et de coupure, à enregistrer la valeur de la vitesse de rotation de la turbomachine correspondant à cette ouverture, à comparer cette valeur à un seuil prédéterminé et à proposer le remplacement de la pompe haute-pression quand la valeur enregistrée de la vitesse de rotation atteint le seuil prédéterminé.

Selon d'autres caractéristiques de l'invention, ce procédé consiste également à mesurer la température du carburant en sortie de la vanne de pressurisation et de coupure et à corriger la valeur enregistrée de la vitesse de rotation en fonction de l'écart entre la température mesurée et une valeur prédéterminée de température, et à déterminer le seuil de comparaison de la valeur enregistrée de la vitesse de rotation de façon à assurer le redémarrage en vol de la turbomachine pendant toute la durée de service de la pompe haute-pression.

De façon générale, l'invention permet d'optimiser l'exploitation des pompes haute-pression dans les circuits d'alimentation en carburant des turbomachines, et permet également de fiabiliser le test automatique de survitesse des turbomachines.

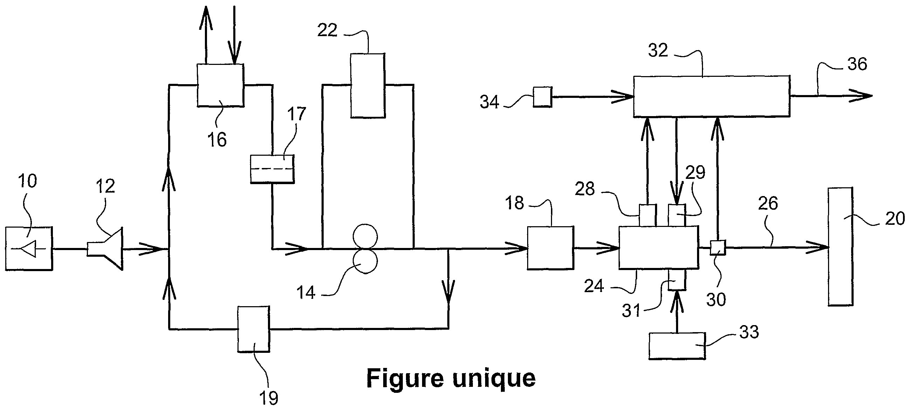

L'invention sera mieux comprise et d'autres caractéristiques, détails et avantages de celle-ci apparaîtront plus clairement à la lecture de la description qui suit, faite à titre d'exemple en référence au dessin annexé, qui représente schématiquement un circuit d'alimentation en carburant des injecteurs d'une turbomachine.

Le circuit d'alimentation en carburant représenté schématiquement au dessin comprend essentiellement un réservoir de carburant 10 auquel est reliée l'entrée d'une pompe basse-pression 12 dont la sortie alimente une pompe haute-pression 14 à engrenages par l'intermédiaire d'échangeurs de chaleur 16 et de filtres 17, les échangeurs de chaleur servant notamment au refroidissement du liquide de lubrification de la turbomachine et d'un système IDG (Integrated Drive Generator).

La sortie de la pompe haute-pression 14 alimente une vanne de réglage de débit 18 (FMV ou Fuel Metering Valve) qui permet de doser la quantité de carburant envoyée à des injecteurs 20 de la turbomachine en fonction des conditions de fonctionnement.

La différence de pression entre l'entrée et la sortie de la pompe 14 est également utilisée pour commander un ensemble 22 d'équipements auxiliaires à géométrie variable, comprenant notamment des actionneurs d'aubes de redresseur à calage variable.

Le surplus de carburant pompé est retourné à l'amont de la pompe haute-pression 14 par l'intermédiaire d'une vanne de dérivation 19.

Une vanne 24 de pressurisation et de coupure est montée entre la sortie de la vanne 18 de réglage de débit et un conduit 26 d'alimentation des injecteurs 20, cette vanne 24 étant sensible à la pression du carburant à la sortie de la vanne 18 et interdisant l'alimentation en carburant des injecteurs 20 tant que cette pression n'atteint pas une certaine valeur, c'est-à-dire tant que la pressurisation du carburant est inférieure à un seuil déterminé, cette pressurisation correspondant à la différence de pression entre la sortie et l'entrée de la pompe 14 et étant par exemple de 19 bars.

La vanne 24 de pressurisation et de coupure est équipée d'un détecteur d'ouverture 28 et de deux organes de commande électro-hydraulique 29 et 31, du type servovalve ou à solénoïde, dont l'un est excité par les moyens de traitement 32 et l'autre par un système de survitesse 33. Ces organes de commande 29 et 31 ne sont efficaces que si la pression est suffisante.

Un capteur de température 30 est monté sur la ligne 26 alimentant les injecteurs 20.

Les signaux fournis par les détecteurs 28 et 30 sont appliqués à des moyens de traitement 32, qui reçoivent également le signal de sortie d'un détecteur 34 mesurant la vitesse de rotation de la turbomachine.

Dans les moyens de traitement 32, le signal d'ouverture de la vanne de pressurisation et de coupure 24, qui est fourni par le détecteur 28, commande l'enregistrement de la valeur de la vitesse de rotation fournie par le détecteur 34, et de la valeur de la température du carburant, fournie par le détecteur 30. Les valeurs enregistrées de la vitesse de rotation sont comparées à une valeur seuil prédéterminée, au-delà de laquelle il serait difficile de redémarrer la turbomachine en vol et qui correspond à une usure maximale admissible de la pompe haute-pression 14. Lorsque cette valeur seuil est atteinte par la vitesse de rotation, un signal 36 est généré par les moyens de traitement 32 pour signaler la nécessité de procéder au remplacement de la pompe haute-pression 14.

La mesure de la température du carburant dans la ligne 26 permet de prendre en compte les variations de densité du carburant qui résultent des variations de température et qui influent sur le débit de la pompe haute-pression 14. Les variations détectées de la température du carburant permettent de corriger les valeurs mesurées de la vitesse de rotation et donc de se ramener au cas d'une alimentation en carburant à température sensiblement constante.

L'ouverture de la vanne 24 de pressurisation et de coupure se produit lors de chaque phase de démarrage de la turbomachine. La surveillance de la pompe haute-pression 14 peut donc être réalisée à chaque démarrage de la turbomachine et permet de suivre régulièrement l'usure de la pompe haute-pression 14, pour proposer son remplacement lorsque cela devient nécessaire.

L'invention permet également de fiabiliser le test de survitesse de la turbomachine en associant de façon originale et automatique ce test à la phase de démarrage et de surveillance de la pompe haute-pression.

Un exemple de logique de test est décrit ci-après, de nombreuses variantes pouvant en être déclinées.

Lorsqu'on démarre le moteur, vers quelques pourcents de régime, un ordre électrique est généré par les moyens de traitement 32 sur la commande électro-hydraulique 29 de la vanne de pressurisation et de coupure 24. Le circuit hydraulique ne s'ouvre pas car le régime est en dessous du seuil d'ouverture de la vanne de pressurisation et de coupure 24.

Le régime augmente du fait de l'action du démarreur et lorsque le seuil d'ouverture (acquis par le détecteur 28) est atteint, les moyens de traitement 32 enregistrent la valeur de la vitesse de rotation qui permet de porter un jugement sur l'état de la pompe haute-pression 14.

Les moyens de traitement 32 fournissent alors un signal au système de survitesse 33 qui déclenche son test, c'est-à-dire la commande de la fermeture de la vanne de pressurisation et de coupure 24 par l'intermédiaire de la commande électro-hydraulique 31.

Les moyens de traitement 32 vérifient par l'intermédiaire du détecteur d'ouverture 28 que le système de survitesse 33 a été efficace et donnent un ordre de fin de test au système de survitesse 33 pour que celui-ci commande en fermeture son organe électro-hydraulique 31. Simultanément, les moyens 32 donnent un ordre de fermeture à la commande électro-hydraulique 29. La vanne de pressurisation et de coupure 24 se ferme.

La rotation du moteur entraîné par le démarreur se poursuit et, au régime optimal de démarrage, les moyens de traitement 32 donnent un ordre d'ouverture à la vanne de pressurisation et de coupure 24 par l'intermédiaire de la commande électro-hydraulique 29 et envoient une commande au boîtier d'allumage qui va énergiser la ou les bougies du moteur.

## Revendications

1. Turbomachine, telle qu'un turboréacteur ou un turbopropulseur d'avion, comprenant un dispositif de surveillance d'une pompe haute-pression (14) dans un circuit d'alimentation en carburant, ce circuit comprenant une vanne (24) de pressurisation et de coupure qui est réglée à un seuil de pression prédéterminé et qui est montée entre une vanne (18) de réglage de débit de carburant et un conduit (26) d'alimentation des injecteurs (20), et des moyens (34) de mesure de la vitesse de rotation de la turbomachine, **caractérisée en ce que** le dispositif comprend des moyens (28) de détection de l'ouverture de la vanne (24) de pressurisation et de coupure, des moyens (32) d'enregistrement de la valeur mesurée de la vitesse de rotation de la turbomachine à l'ouverture de la vanne (24) de pressurisation et de coupure, et des moyens de comparaison de cette valeur mesurée à un seuil prédéterminé, pour proposer le remplacement de la pompe haute-pression (14) quand la valeur enregistrée de la vitesse de rotation atteint le seuil prédéterminé.

2. Turbomachine selon la revendication 1, **caractérisée en ce que** le dispositif comprend des moyens (30) de mesure de la température du carburant en sortie de la vanne (24) de pressurisation et de coupure et des moyens (32) de correction de la valeur enregistrée de la vitesse de rotation en fonction de l'écart entre la température mesurée et une température prédéterminée.

3. Procédé de surveillance d'une pompe haute-pression dans un circuit d'alimentation en carburant d'une turbomachine selon la revendication 1 ou 2, **caractérisé en ce qu'**il consiste à détecter l'ouverture d'une vanne (24) de pressurisation et de coupure, à enregistrer la valeur de la vitesse de rotation de la turbomachine correspondant à cette ouverture, à comparer cette valeur à un seuil prédéterminé et à proposer le remplacement de la pompe haute-pression (14) quant la valeur enregistrée de la vitesse de rotation atteint le seuil prédéterminé.

4. Procédé selon la revendication 3, **caractérisé en ce qu'**il consiste à détecter l'ouverture de la vanne (24) de pressurisation et de coupure et à enregistrer la valeur de la vitesse de rotation correspondante lors de chacune des phases de démarrage de la turbomachine.

5. Procédé selon la revendication 3 ou 4, **caractérisé en ce qu'**il consiste à mesurer la température du carburant en sortie de la vanne de pressurisation et de coupure (24) et à corriger la valeur enregistrée de la vitesse de rotation en fonction de l'écart entre la température mesurée du carburant et une valeur prédéterminée de température.

6. Procédé selon l'une des revendications 3 à 5, **caractérisé en ce qu'**il consiste à déterminer le seuil de comparaison de la valeur enregistrée de la vitesse de rotation de façon à assurer le redémarrage en vol de la turbomachine pendant toute la durée de service de la pompe haute-pression (14).

7. Procédé selon l'une des revendications 4 à 6, **caractérisé en ce qu'**il consiste à effectuer un test d'un système de survitesse (33) pendant la phase de démarrage de la turbomachine et après détection de l'ouverture de la vanne de pressurisation et de coupure (24).

## Patentansprüche

1. Turbotriebwerk, wie etwa Turbostrahltriebwerk oder Turboprop-Triebwerk für Flugzeuge, enthaltend eine Vorrichtung zum Überwachen einer Hochdruckpumpe (14) in einem Kraftstoffversorgungskreis, wobei dieser Kraftstoffversorgungskreis ein Druckbeaufschlagungs- und Absperrventil (24) enthält, das auf einen vorbestimmten Druckschwellwert eingestellt ist und das zwischen einem Kraftstoffdurchsatzeinstellventil (18) und einer Versorgungsleitung (26) zum Versorgen von Injektoren (20) angebracht ist, sowie Einrichtungen (34) zum Messen der Drehzahl des Turbotriebwerks, **dadurch gekennzeichnet, dass** die Vorrichtung Erfassungseinrichtungen (28) zum Erfassen des Öffnens des Druckbeaufschlagungs- und Absperrventils (24), Aufzeichnungseinrichtungen (32) zum Aufzeichnen des Messwerts der Drehzahl des Turbotriebwerks beim Öffnen des Druckbeaufschlagungs- und Absperrventils (24) und Vergleichseinrichtungen zum Vergleichen dieses Messwerts mit einem vorbestimmten Schwellwert enthält, um das Austauschen der Hochdruckpumpe (14) dann vorzuschlagen, wenn der aufgezeichnete Wert der Drehzahl den vorbestimmten Schwellwert erreicht.

2. Turbotriebwerk nach dem Anspruch 1, **dadurch gekennzeichnet, dass** die Vorrichtung Messeinrichtungen (30) zum Messen der Temperatur des Kraftstoffs am Auslass des Druckbeaufschlagungs- und Absperrventils (24) und Korrektureinrichtungen (32) zum Korrigieren des aufgezeichneten Werts der Drehzahl in Abhängigkeit von der Abweichung zwischen der gemessenen Temperatur und einer vorbestimmten Temperatur aufweist.

3. Verfahren zum Überwachen einer Hochdruckpumpe in einem Kraftstoffversorgungskreis eines Turbotriebwerks nach dem Anspruch 1 oder 2, **dadurch gekennzeichnet, dass** es darin besteht, das Öffnen eines Druckbeaufschlagungs- und Absperrventils (24) zu erfassen, den Wert der Drehzahl des Turbotriebwerks, der diesem Öffnen entspricht, aufzuzeichnen, diesen Wert mit einem vorbestimmten Schwellwert zu vergleichen und den Austausch der Hochdruckpumpe (14) dann vorzuschlagen, wenn der aufgezeichnete Wert der Drehzahl den vorbestimmten Schwellwert erreicht.

4. Verfahren nach Anspruch 3, **dadurch gekennzeichnet, dass** es darin besteht, bei jeder der Anlaufphasen des Turbotriebwerks das Öffnen des Druckbeaufschlagungs- und Absperrventils (24) zu erfassen und den Wert der entsprechenden Drehzahl aufzuzeichnen.

5. Verfahren nach Anspruch 3 oder 4, **dadurch gekennzeichnet, dass** es darin besteht, die Temperatur des Kraftstoffs am Auslass des Druckbeaufschlagungs- und Absperrventils (24) zu erfassen und den aufgezeichneten Wert der Drehzahl in Abhängigkeit von der Abweichung zwischen der gemessenen Temperatur des Kraftstoffs und einem vorbestimmten Temperaturwert zu korrigieren.

6. Verfahren nach einem der Ansprüche 3 bis 5, **dadurch gekennzeichnet, dass** es darin besteht, den Vergleichsschwellwert des aufgezeichneten Werts der Drehzahl so zu bestimmen, dass der Wiederanlauf des Turbotriebwerks im Flug während der gesamten Betriebsdauer der Hochdruckpumpe (14) sichergestellt ist.

7. Verfahren nach einem der Ansprüche 4 bis 6, **dadurch gekennzeichnet, dass** es darin besteht, einen Test eines Überdrehzahlsystems (33) während der Anlaufphase des Turbotriebwerks und nach Erfassung des Öffnens des Druckbeaufschlagungs- und Absperrventils (24) durchzuführen.

## Claims

1. Turbine engine, such as an aircraft turbofan or a turboprop, comprising a device for monitoring a high-pressure pump (14) in a engine fuel supply circuit, said circuit comprising a pressurising and shut-off valve (24) which is regulated at a predetermined pressure threshold and which is mounted between a fuel flow regulating valve (18) and a supply duct (26) of the injectors (20), and means (34) for measuring the rotational speed of the turbine engine, **characterised in that** it comprises means (28) for detecting the opening of the pressurising and shut-off valve (24), means (32) for recording the measured value of the rotational speed of the turbine engine at the opening of the pressurising and shut-off valve (24), and means for comparing this measured value with a predetermined threshold, in order to propose the replacement of the high-pressure pump (14) when the recorded value of the rotational speed reaches the predetermined threshold.

2. Turbine engine according to claim 1, characterised the device comprise means (30) for measuring the fuel temperature at the outlet of the pressurising and shut-off valve (24) and means (32) for correcting the recorded value of the rotational speed according to the difference between the measured temperature and a predetermined temperature.

3. Method for monitoring a high-pressure pump in a turbine engine fuel supply circuit of a turbine engine according to claim 1 or 2, **characterised in that** it consists in detecting the opening of a pressurising and shut-off valve (24), in recording the value of the rotational speed of the turbine engine corresponding to this opening, in comparing said value with a predetermined threshold and in proposing the replacement of the high-pressure pump (14) when the recorded value of the rotational speed reaches the predetermined threshold.

4. Method according to claim 3, **characterised in that** it consists in detecting the opening of the pressurising and shut-off valve (24) and in recording the value of the corresponding rotational speed during each of the starting phases of the turbine engine.

5. Method according to claim 3 or 4, **characterised in that** it consists in measuring the temperature of the fuel at the outlet of the pressurising and shut-off valve (24) and in correcting the recorded value of the rotational speed according to the difference between the measured temperature of the fuel and a predetermined temperature value.

6. Method according to one of claims 3 to 5, **characterised in that** it consists in determining the comparison threshold of the recorded value of the rotational speed in such a way as to enable the restarting in flight of the turbine engine throughout the entire service life of the high-pressure pump (14).

7. Method according to one of claims 4 to 6, **characterised in that** it consists in carrying out a test of an overspeed system (33) during the starting phase of the turbine engine and after detection of the opening of the pressurising and shut-off valve (24).
